# FASCICULE DE BREVET EUROPEEN

(11) **EP 4 237 879 B1**
(45) Date de publication et mention de la délivrance du brevet: **03.12.2025**
(21) Numéro de dépôt: 21798049.9
(22) Date de dépôt: 27.10.2021
(51) Int. Cl.: G01V 5/00, G01V 5/04

(54) **DISPOSITIF ET PROCÉDÉ DE TOMOGRAPHIE DENSITOMÉTRIQUE PAR PARTICULES ÉLÉMENTAIRES**
VORRICHTUNG UND VERFAHREN ZUR DENSITOMETRISCHEN TOMOGRAPHIE UNTER VERWENDUNG VON ELEMENTARTEILCHEN
DEVICE AND METHOD FOR DENSITOMETRIC TOMOGRAPHY USING ELEMENTARY PARTICLES

(30) Priorité: 28.10.2020 FR 2011066
(43) Date de publication de la demande: 06.09.2023
(73) Titulaire: Centre National de la Recherche Scientifique, 75016 Paris 16 (FR); Ecole Normale Supérieure de Lyon, 69007 Lyon (FR); Université Claude Bernard Lyon 1, 69100 Villeurbanne (FR)
(72) Inventeur: MARTEAU, Jacques, 69003 LYON (FR); IANIGRO, Jean-Christophe, 01600 misérieux (FR); GIBERT, Dominique, 35830 BETTON (FR); CHEVALIER, Antoine, 75012 PARIS 12 (FR)
(74) Mandataire: Icosa
(86) Numéro de dépôt international: PCT/EP2021/079898
(87) Numéro de publication internationale: WO 2022/090350

(56) Documents cités:
- FR-A1- 3 042 535
- US-A1- 2011 035 151
- US-B1- 10 585 208
- MARTEAU J ET AL: "Muons tomography applied to geosciences and volcanology", ARXIV.ORG, CORNELL UNIVERSITY LIBRARY, 201 OLIN LIBRARY CORNELL UNIVERSITY ITHACA, NY 14853, 31 January 2012 (2012-01-31), XP080561274, DOI: 10.1016/J.NIMA.2011.11.061

## Description

### DOMAINE TECHNIQUE

L'invention concerne le domaine de la tomographie densitométrique qui est mise en œuvre pour détecter les différentes densités présentes par exemple dans le sol, dans des formations géologiques, ou dans des constructions. L'invention concerne plus particulièrement la tomographie densitométrique par particules élémentaires, tels que les muons. Les muons, particules élémentaires produites par la rencontre des rayons cosmiques avec la haute atmosphère terrestre, balayent les objets présents sur terre, jusque dans les sous-sols, et l'analyse des flux de muons traversant un objet est couramment employée pour réaliser une tomographie de cet objet.

### ART ANTÉRIEUR

Le document « Theoretical sudies of in-situ rock density determinations using underground cormic-ray muon intensity measurements with application in mining geophysics », L. Malmqvist et al., Geophysics Vol.44, N°9, September 1979; P.1549-1569, décrit la mise en œuvre de divers télescopes réalisés chacun par deux plaques de scintillateurs qui sont parallèles et en vis-à-vis l'une de l'autre. Chaque muon traversant les deux plaques de détection est pris en compte pour former une image représentative des différentes densités des objets ou du terrain traversés. Ce document décrit notamment l'influence de l'écartement des plaques de détection sur l'angle d'ouverture du détecteur ainsi formé et sur son acceptance, c'est-à-dire sa capacité à détecter les particules en provenance de différentes directions.

Le document « Muon tomography: Plans for observations in the Lesser Antilles », Gibert, D., Beauducel, F., Déclais, Y, Lesparre, N., Marteau, J., Nicollin, F., & Tarantola, A. (2010), Earth, planets and space, 62(2), 153, décrit une méthodologie de tomographie tridimentionnelle par muons.

Le document « Three-dimensional density structure of La Soufrière de Guadeloupe lava dome from simultaneous muon radiographies and gravity data », Rosas-Carbajal et al., Geophysical Research Letters, American Geophysical Union, 2017, 44 (13), pp.6743-6751, décrit le sondage d'un volcan par trois télescopes disposés autour du volcan.

L'ouvrage de Nagamine, K. (2003) « Introductory muon science », Cambridge University Press, aborde les points techniques et applicatifs de la densitométrie par muons.

Le document D1 (US 10585208 B1) est un brevet qui divulgue un procédé d'exploration souterraine du rayonnement cosmique de particules muons, par l'utilisation de plusieurs détecteurs gazeux et pixellisés grâce à des circuits imprimés, appliqué à la recherche de gisements pétroliers.

Le document D2 (US 2011/0035151 A1) est une demande de brevet qui divulgue également un procédé basé sur l'utilisation de plusieurs détecteurs du rayonnement cosmique de particules muons appliqué à la recherche de gisements pétroliers.

### EXPOSÉ DE L'INVENTION

L'invention a pour but d'améliorer les dispositifs de tomographie densitométrique de l'art antérieur.

À cet effet, l'invention vise un dispositif de tomographie densitométrique par particules élémentaires, comportant :
- un détecteur de particules élémentaires muni d'au moins quatre plaques de détection ;
- un module électronique de commande connecté au détecteur de particules élémentaires et adapté à détecter la présence de particules élémentaires sur chacune des plaques de détection.

Dans ce dispositif, le détecteur de particules élémentaires comporte au moins :
- un premier axe de visée dans lequel le détecteur de particules élémentaires présente une première acceptance ;
- un deuxième axe de visée, non parallèle au premier axe de visée, dans lequel le détecteur de particules élémentaires présente une deuxième acceptance.

Dans toute la description et les revendications, la notion d'axe de visée désigne une direction dans laquelle l'acceptance d'une paire de plaques de détection est maximale. Dans le cas courant de plaques de détection parallèles et situées en vis-à-vis l'une de l'autre, l'axe de visée est une direction normale aux plaques de détection.

L'acceptance est ici définie comme la grandeur qui représente la capacité des détecteurs à collecter les particules élémentaires provenant d'un ensemble de directions. Cet ensemble de directions définit un « champ visuel » qui est généralement caractérisé par un angle solide (comme le champ visuel d'un œil). Plus l'angle solide est ouvert et plus on collecte de particules mais, dans ce cas, la direction des particules détectées est moins bien déterminée. On évite en général un angle solide trop ouvert pour garder une bonne directivité de détection (ce qui est préférable pour réaliser une tomographie fine des cibles). Pour compenser la diminution de l'angle solide, la surface du détecteur peut être augmentée. L'acceptance est le produit de ces deux paramètres : l'angle solide et la surface de détection.

L'acceptance définie ci-dessus correspond à un détecteur parfait qui détecte toutes les particules. La notion d'acceptance peut être affinée si on considère l'efficacité de détection, c'est-à-dire si l'on prend en compte le fait que les détecteurs échouent à détecter certains passages de particules pour diverses raisons (temps morts de l'électronique, imperfections des photomultiplicateurs, des fibres optiques, des scintillateurs, etc.). On peut ainsi également considérer l'acceptance efficace qui serait égale au produit de l'angle solide évoqué, de la surface de détection, et d'un coefficient d'efficacité des détecteurs de particules.

Optionnellement, Certains détecteurs de particules (appelés « détecteurs sandwichs ») peuvent être utilisés. Ces détecteurs permettent de déterminer directement ce coefficient d'efficacité en exploitant une redondance dans les moyens de détection.

Un autre objet de l'invention vise un procédé de tomographie densitométrique par particules élémentaires comportant la détection de flux de particules élémentaires traversant au moins un ensemble d'au moins deux plaques de détection, ce procédé comportant les étapes suivantes :
- détecter un flux de particules élémentaires selon un premier axe de visée relatif à une première acceptance ;
- détecter un flux de particules élémentaires selon un deuxième axe de visée, non parallèle au premier axe de visée, relatif à une deuxième acceptance qui est différente de la première acceptance.

Le dispositif et le procédé selon l'invention mettent en œuvre différents axes de visée correspondant chacun à une acceptance différente.

Le dispositif selon l'invention peut être adapté à un milieu particulier de mise en œuvre en adaptant les différents axes de visée et leur acceptance correspondante. Par exemple, le flux de particules selon un axe de visée zénithal est bien plus important que le flux de particules selon un axe de visée proche de l'horizontale. Dans ce cas, le détecteur de particules peut comporter un axe de visée zénithal avec une acceptance moindre que celle d'un axe de visée proche de l'horizontale.

Le dispositif de tomographie présente ainsi une acceptance adaptative permettant tout d'abord d'adapter l'acceptance à un axe de visée particulier et donc au flux de particules correspondant à cet axe de visée, et permettant de plus d'établir des correspondances entre les flux de particules captés suivant les différents axes de visée.

Le caractère adaptatif des acceptances correspondant aux différents axes de visée est particulièrement adapté à un dispositif de tomographie mobile tel que ceux montés dans certains tunneliers.

Le dispositif de tomographie selon l'invention permet de produire des données de qualité statistique identique pour toutes les directions visées, le caractère adaptatif de l'acceptance permettant d'obtenir un rapport signal bruit similaire pour toutes ces directions.

En outre, le dispositif selon l'invention est tel que :
- le détecteur de particules élémentaires comporte un châssis dans lequel est monté au moins : un premier ensemble de plaques de détection parallèles orientées angulairement selon le premier axe de visée ; un deuxième ensemble de plaques de détection parallèles orienté angulairement selon le deuxième axe de visée ;
- les différents ensembles de plaques de détection parallèles sont imbriqués ;
- le deuxième axe de visée est plus proche de la direction zénithale que le premier axe de visée et la première acceptance est supérieure à la deuxième acceptance ;

Le dispositif selon l'invention peut comporter les caractéristiques additionnelles suivantes, seules ou en combinaison :
- le module électronique de commande est adapté à calibrer, notamment de manière continue, les informations de flux de particules élémentaires reçues selon le premier axe de visée sur la base des informations de flux de particules élémentaires reçues selon le deuxième axe de visée ;
- dans le premier ensemble de plaques de détection parallèles, les plaques de détection sont d'une surface supérieure à celle des plaques de détection du deuxième ensemble de plaques de détection parallèles ;
- dans le premier ensemble de plaques de détection parallèle, l'écartement des plaques de détection est supérieur à l'écartement des plaques de détection du deuxième ensemble de plaques de détection parallèles ;
- le détecteur de particules élémentaires comporte en outre des ensembles supplémentaires de plaques de détection parallèles présentant chacun une acceptance différente des autres ensembles de plaques de détection parallèles, ces ensembles supplémentaires de plaques de détection parallèles correspondant chacun à un axe de visée situé angulairement entre le premier axe de visée et le deuxième axe de visée ;
- le détecteur de particules élémentaires est un détecteur de muons.

Le procédé selon l'invention peut comporter les caractéristiques additionnelles suivantes, seules ou en combinaison :
- le procédé comporte en outre l'étape de calibrer les informations de flux de particules élémentaires reçues selon le premier axe de visée sur la base des informations de flux de particules élémentaires reçues selon le deuxième axe de visée ;
- les particules élémentaires détectées sont des muons.

### PRÉSENTATION DES FIGURES

D'autres caractéristiques et avantages de l'invention ressortiront de la description non limitative qui suit, en référence aux dessins annexés dans lesquels :
- La figure 1 illustre un dispositif de tomographie densitométrique par particules selon un premier mode de réalisation de l'invention ;
- La figure 2 illustre un dispositif de tomographie densitométrique par particules selon un deuxième mode de réalisation permettant de comprendre le contexte de l'invention ;
- La figure 3 illustre un dispositif de tomographie densitométrique par particules selon un troisième mode de réalisation permettant de comprendre le contexte de l'invention ;
- La figure 4 illustre un dispositif de tomographie densitométrique par particules selon un quatrième mode de réalisation de l'invention ;
- La figure 5 représente schématiquement les acceptances relatives au dispositif de la figure 4.

### DESCRIPTION DÉTAILLÉE

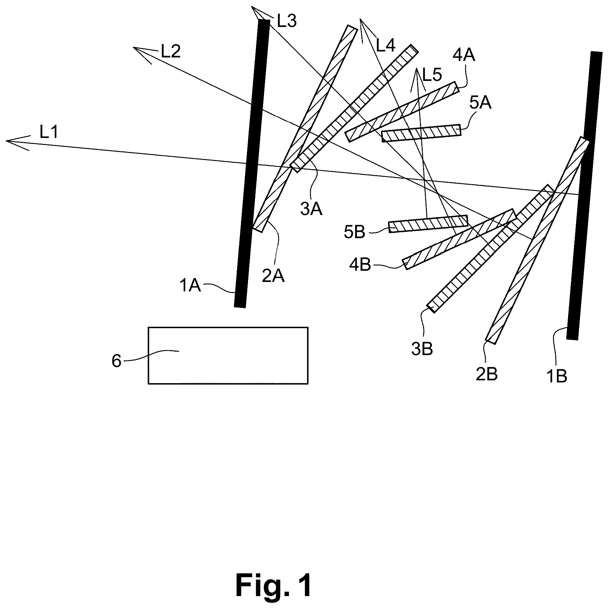

La figure 1 illustre un dispositif de tomographie densitométrique par détection de particules élémentaires selon un premier mode de réalisation de l'invention.

Dans cet exemple, les particules élémentaires considérées sont des muons, qui sont des particules bien adaptées aux opérations de densitométrie. Le dispositif comporte ainsi un détecteur de muons réalisé, dans le présent exemple, par :
- une première paire de plaques de détection parallèles 1A, 1B ;
- une deuxième paire de plaques de détection parallèles 2A, 2B ;
- une troisième paire de plaques de détection parallèles 3A, 3B ;
- une quatrième paire de plaques de détection parallèles 4A, 4B ;
- une cinquième paire de plaques de détection parallèles 5A, 5B.

Les plaques de détection peuvent être monocouches ou multicouches.

Sur la représentation schématique de la figure 1, les paires de plaques sont vues de profil et chaque paire de plaques de détection est ainsi représentée par deux segments parallèles. Dans le présent exemple, les plaques de détection sont de forme carrée et la longueur du segment correspond au côté de ce carré. Chacune des plaques de détection peut être réalisée par tout moyen adapté à la détection de muons, par exemple des scintillateurs, des détecteurs gazeux ou à émulsion, tels que des « Résistive plate chambers », RPC, en anglais, des détecteurs Micromegas (Micro Mesh Gaseous Structure, en anglais).

Dans le présent exemple, la première paire de plaques de détection 1A, 1B, est formée de deux matrices planes et parallèles espacées de 100 centimètres et comportant 32 × 32 pixels de 5 centimètres de côté.

Chacune des paires de plaques de détection définit un axe de visée qui est une direction normale aux plaques de détection :
- la première paire de plaques de détection 1A, 1B définit un axe de visée L1 qui est ici proche de l'horizontale ;
- la deuxième paire de plaques de détection 2A, 2B définit un axe de visée L2 ;
- la troisième paire de plaques de détection 3A, 3B définit un axe de visée L3 ;
- la quatrième paire de plaques de détection 4A, 4B définit un axe de visée L4 ;
- la cinquième paire de plaques de détection 5A, 5B définit un axe de visée L5, qui est ici proche de la direction zénithale.

Le détecteur de muons est monté dans un châssis (non représenté) qui garantit le maintien en position des paires de plaques de détection et leur orientation de sorte que les axes de visée L2, L3, L4 soient régulièrement angulairement répartis entre les deux axes de visée extrêmes L1, L5. L'orientation angulaire des plaques de détection est prévue de sorte que les axes de visée L1 à L5 couvrent régulièrement une large plage angulaire allant de l'axe de visée L1 qui est proche de l'horizontale jusqu'à l'axe de visée L5 qui est proche de la direction zénithale.

Les paires de plaques de détection présentent une taille diminuant régulièrement de la première paire de plaques de détection 1A, 1B jusqu'à la cinquième paire de plaques de détection 5A, 5B. Les plaques de la cinquième paire 5A, 5B présentent un côté inférieur à celui des plaques de la quatrième paire 4A, 4B, qui présentent elles-mêmes un côté inférieur à celui des plaques de la troisième paire 3A, 3B, qui présentent elles-mêmes un côté inférieur à celui des plaques de la deuxième paire 2A, 2B, qui présentent elles-mêmes un côté inférieur à celui des plaques de la première paire 1A, 1B.

Les paires de plaques de détection sont par ailleurs imbriquées les unes dans les autres, de manière compacte, tel qu'illustré à la figure 1. Autrement dit :
- la deuxième paire de plaques 2A, 2B, est contenue entre les deux plaques de la première paire 1A, 1B ;
- la troisième paire de plaques 3A, 3B, est contenue entre les deux plaques de la deuxième paire 2A, 2B ;
- la quatrième paire de plaques 4A, 4B, est contenue entre les deux plaques de la troisième paire 3A, 3B ;
- la cinquième paire de plaques 5A, 5B, est contenue entre les deux plaques de la quatrième paire 4A, 4B.

Selon cette construction, la première paire de plaques de détection 1A, 1B présente la plus forte acceptance et la cinquième paire de plaques de détection 5A, 5B présente la plus faible acceptance. L'acceptance des paires de plaques intermédiaires 2A, 2B ; 3A, 3B ; 4A, 4B ; décroit régulièrement depuis l'acceptance de la première paire de plaques 1A, 1B, jusqu'à l'acceptance de la cinquième paire de plaques 5A, 5B.

L'acceptance d'un détecteur de muons est sa capacité à accepter des particules en son sein. Cette acceptance est ici liée à l'angle d'ouverture défini par la taille et l'écartement de chaque paire de plaques, cet angle d'ouverture correspondant à un secteur angulaire d'acceptation de muons qui conditionne les muons qui pourront traverser les deux plaques de détection et qui pourront donc être pris en compte par le dispositif de tomographie densitométrique. L'acceptance des paires de plaques de détection est uniquement fonction de la taille de ces plaques et de leur écartement, car le dispositif de la figure 1 est statique. Plus les plaques sont rapprochées, plus l'acceptance augmente. Plus les plaques sont grandes, plus l'acceptance augmente.

Plusieurs acceptances, en fonction de l'axe de visée considéré, sont ainsi obtenues au sein d'un seul et même détecteur de muons structuré sur un même châssis.

En plus de l'acceptance et de l'axe de visée différents, les détecteurs peuvent de plus présenter des dimensions et un nombre de pixels différents.

Le dispositif comporte de plus un module électronique de commande 6, auquel sont reliées toutes les plaques de détection, adapté à détecter tout impact d'un muon sur l'une des plaques de détection. Ainsi, le module électronique de commande 6 est capable de détecter le passage d'un seul et même muon au travers des deux plaques de détection d'une même paire de plaques de détection et de prendre ainsi en compte ce muon pour la mesure tomographique. Le dispositif est ainsi adapté à relever des flux de muons dans chacun des axes de visée L1 à L5. Pour chacun de ces axes de visée, les différences dans la densité du flux de muons au sein d'une même paire de plaques de détection est représentatif d'une différence de densité de la cible observée.

Notons que la vue schématique de la figure 1 est simplifiée pour exposer ses principes de fonctionnement. En pratique, un troisième plan de détection serait de préférence prévu entre chaque paire de plaques de détection, afin de filtrer le signal en éliminant les coïncidences fortuites (lorsque les deux plaques de détection sont frappées simultanément, mais par deux muons différents).

L'acceptance de chacune des paires de plaques de détection est ici adaptée à l'axe de visée correspondant. Dans cet exemple, la cinquième paire de plaques de détection 5A, 5B bénéficie du flux de muons le plus important, car son axe de visée L5 est proche de la direction zénithale, où le flux de muons est naturellement le plus important compte tenu de la nature et de la formation de ces particules. À l'inverse, la première paire de plaques de détection 1A, 1B correspond à un axe de visée L1 qui est proche de l'horizontale et qui bénéficie donc d'un flux naturel de muons bien inférieur. L'acceptance correspondant à l'axe de visée L5 est donc réduite par rapport à l'acceptance correspondant à l'axe de visée L1, de préférence dans les mêmes proportions que le flux naturel de muons est réduit de l'un à l'autre de ces axes de visée.

De cette manière, les axes de visée bénéficiant naturellement d'un important flux de muons ont une acceptance réduite tandis que les axes de visée bénéficiant d'un faible flux de muons bénéficient d'une acceptance augmentée.

Entre la première paire de plaques de détection 1A, 1B et la cinquième paire de plaques de détection 5A, 5B, les autres paires de plaques de détection 2A, 2B ; 3A, 3B ; 4A, 4B ; couvrent le secteur angulaire correspondant de manière régulière avec une variation progressive de l'acceptance correspondant à chacun des axes de visée.

Le dispositif est particulièrement adapté à être monté sur un tunnelier pour sonder les différences de densité du sol (et notamment la présence de creux) à l'avant du tunnelier ainsi que selon divers angles au-dessus du passage du tunnelier. Dans cet exemple, l'adaptation de l'acceptance du détecteur de muons en fonction des axes de visée permet de compenser plusieurs effets :
- la densité du flux de muons naturel en fonction de l'angle zénithal, comme exposé précédemment ;
- la variation de l'opacité du sol sondé en fonction de l'angle zénithal ;
- le mouvement d'avancement du tunnelier impliquant que les directions verticales sont observées moins longtemps que les directions en avant du tunnelier.

Ces trois effets se combinent pour déterminer (expérimentalement ou par le calcul) le dimensionnement de l'acceptance de chacune des paires de plaques pour une application donnée, afin d'obtenir l'acceptance adéquate pour cette application. Dans cet exemple, l'axe de visée L1 serait tourné vers l'avant du tunnelier tandis que l'axe de visée L5 serait tourné vers une direction proche de la direction zénithale.

Le dispositif de tomographie bénéficie d'un montage compact, avec un seul dispositif de châssis limitant les dispersions dimensionnelles et les jeux de montage pour les paires de plaques de détection, facilement intégrable dans un tunnelier mais également employable pour une tomographie statique (tomographie de volcans, par exemple).

Selon une caractéristique préférée, le module électronique de commande est adapté à mettre en correspondance les données de flux de muons captées par chacune des paires de plaques de détection. Plus précisément, le dispositif est adapté à corriger les données de flux de muons captées par certaines paires de plaques de détection en fonction du flux de muons reçu par une autre paire de plaques de détection.

Par exemple, la cinquième paire de plaques de détection 5A, 5B détecte, en moyenne, un flux de muons correspondant au flux de muons naturel d'intensité maximale correspondant à la direction zénithale. Ainsi, une baisse générale dans l'intensité du flux de muons atteignant la terre à cet endroit (imputable par exemple à des conditions atmosphériques) peut être détecté par la cinquième paire de plaques de détection 5A, 5B. Le module électronique de commande 6 peut alors répercuter cette baisse générale dans l'intensité du flux de muons aux mesures prises par les autres paires de plaques de détection, pour une calibration de ces axes de visée.

Le module 6 peut également réaliser de manière continue cette calibration, par une boucle de rétroaction qui permet d'obtenir un dispositif auto-apprenant qui bénéficie d'une calibration automatique de ses axes de visée, en fonction de la variation du flux naturel de muons capté par l'un de ses axes de visée.

Avec, par exemple, une paire de plaques de détection 5A, 5B destinée à la calibration, avec une acceptation minimale, des paires de plaques de détection visant la cible à tomographier peuvent ainsi bénéficier d'une acceptance maximale et d'une calibration automatique du flux de muons en fonction du relevé de la paire de plaques 5A, 5B de calibration.

Le procédé permet l'amélioration de la performance de détection (notamment par une amélioration de l'acceptance) en intégrant de l'information prise en direct sur un autre axe de visée (flux de muons au zénith par exemple) et de l'information différée par rétro-analyse de zones vues à l'avant (dans l'exemple du tunnelier). Ceci est rendu possible par la configuration du dispositif décrit, et de ses différentes acceptances en fonction des axes de visée.

Bien entendu, tout autre combinaison de calibrage automatique selon des axes de visée en fonction d'un autre axe de visée, est possible en fonction de l'orientation du dispositif, de son éventuel mouvement, et de la disposition du milieu à tomographier.

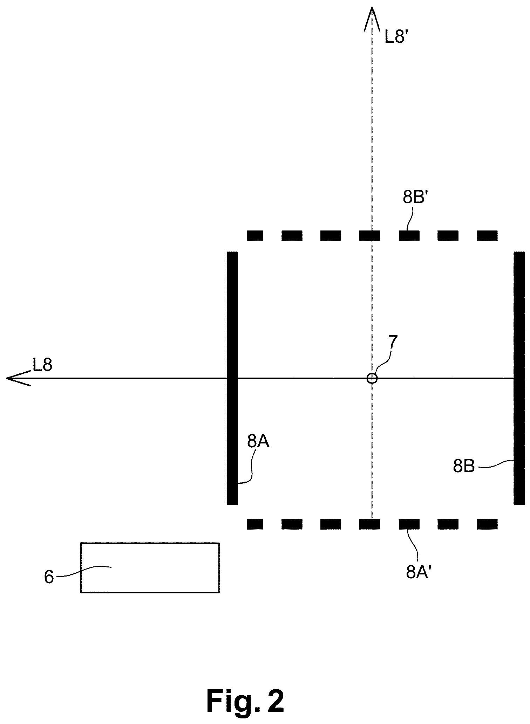

La figure 2 illustre un dispositif de tomographie selon un deuxième mode de réalisation permettant de comprendre le contexte l'invention. Le dispositif selon ce deuxième mode de réalisation a trait à une réalisation différente de l'acceptance adaptative en fonction de l'axe de visée et bénéficie des mêmes avantages et des mêmes possibilités d'application que celui du premier mode de réalisation.

Selon ce deuxième mode de réalisation, le dispositif de tomographie comporte un détecteur de muons constitué ici d'une seule paire de plaques de détection 8A, 8B reliée à un module électronique de commande 6.

La paire de plaques de détection 8A, 8B est ici montée sur un châssis mobile en rotation autour d'un axe 7. Le module électronique de commande 6 pilote de plus une motorisation de cette rotation en commandant par exemple un moteur électrique adapté à faire pivoter la paire de plaques de détection 8A, 8B autour de cet axe 7.

Le détecteur de muons est ainsi mobile entre deux positions extrêmes dont l'une est représentée en traits pleins sur la figure 2, correspondant à un axe de visée L8 sensiblement horizontal, et une position représentée en pointillés (les plaques étant référencées 8A' et 8B') sur la figure 2 correspondant à un axe de visée L8' s'étendant sensiblement dans la direction zénithale.

Grâce à la commande en pivotement du détecteur de muon, le dispositif de tomographie comporte ainsi au moins deux axes de visée (les deux axes L8 et L8' représentés figure 2). De préférence, le détecteur de muons comporte d'autres axes de visée supplémentaires entre les axes extrêmes L8 et L8'. Le module électronique de commande 6 peut ainsi commander le pivotement du détecteur de muons afin que ce dernier balaye de manière continue le secteur angulaire entre les deux positions extrêmes L8 et L8' en fonction des angles de visée souhaités. Alternativement, ce balayage peut être réalisé de manière discontinue, le détecteur de muons étant ainsi pivoté et arrêté en un certain nombre de positions angulaires discrètes entre les deux positions extrêmes L8 et L8'.

Le dispositif selon ce deuxième mode de réalisation présente également une acceptance adaptée en fonction de l'axe de visée. À cet effet, le module électronique de commande 6 pilote la rotation du détecteur de muons de sorte que ce dernier soit exposé au rayonnement de muons plus ou moins longtemps en fonction de l'axe de visée considéré. En effet, le détecteur de muons est constitué d'une seule paire de plaques de détection 8A, 8B dont les dimensions sont fixes, et l'acceptance peut être augmentée ou diminuée pour un axe de visée particulier en augmentant ou diminuant le temps d'exposition du détecteur de muons. Le premier axe de visée L8 correspond ainsi à un premier temps d'exposition, et le deuxième axe de visée L8' correspond à un deuxième temps d'exposition. Il en va de même pour les autres axes de visée supplémentaires qui correspondront chacun à un temps d'exposition particulier. Différentes acceptance sont ainsi obtenues.

Dans le présent exemple, l'acceptance correspondant à l'axe de visée horizontal L8 est souhaitée supérieure à l'acceptance correspondant à l'axe de visée zénithal L8'. Dans ce cas, le module électronique de commande 6 pourra piloter la rotation du détecteur de muons de la manière suivante :
- dans le cas où le mouvement du détecteur de muons est continu, la rotation du détecteur de muons aux alentours de la position correspondant à l'axe de visée horizontal L8 sera réalisée à une vitesse inférieure à celle de sa rotation aux alentours de l'axe de visée L8' proche de la direction zénithale, de sorte que le temps d'exposition soit augmenté aux alentours de l'axe de visée horizontal L8 ;
- dans le cas où la rotation du détecteur de muons est discontinue, c'est-à-dire que le détecteur de muons est pivoté et est maintenu en place dans un nombre prédéterminé de positions angulaires entre les deux axes de visée L8, L8', la durée dans laquelle le détecteur de muons est maintenu selon l'axe de visée horizontal L8 est supérieure à la durée dans laquelle il est maintenu selon l'axe de visée zénithal L8'.

Ainsi, l'acceptance correspondant à l'axe de visée zénithal est réduite par rapport à l'acceptance correspondant à l'axes de visée horizontale en y réduisant le temps d'exposition du détecteur de muon.

De la même manière, l'acceptance de tout autre axe de visée prévu entre les deux axes L8 et L8' pourra être adapté en modifiant la vitesse de rotation aux alentours de cet axe de visée, ou le temps de maintien dans cet axe de visée.

De même que pour le premier mode de réalisation, le module électronique de commande 6 peut également mettre en œuvre une boucle de rétroaction permettant le calibrage automatique du dispositif en mettant en correspondance les relevés effectués selon les différents axes de visée, et en particulier en calibrant les axes de visée tournés sur la cible à tomographier en fonction des relevés réalisés sur les axes de visée proches de la direction zénithale.

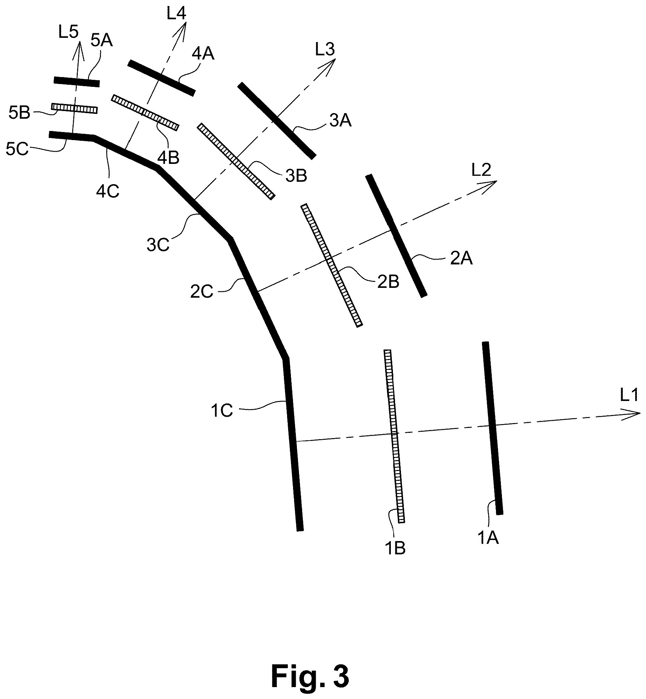

La figure 3 illustre un troisième mode de réalisation d'un dispositif de tomographie densitométrique, qui est une variante du dispositif de la figure 1 et permettant de comprendre le contexte de l'invention. Les éléments similaires portent les mêmes numéros de renvoi aux figures.

Le dispositif illustré comporte ainsi cinq ensembles de plaques de détection parallèles (1A, 1B, 1C ; 2A, 2B, 2C ; 3A, 3B, 3C ; 4A, 4B, 4C ; 5A, 5B, 5C), chaque ensemble comportant ici trois plaques de détection parallèles, toutes les plaques étant fixées sur un même châssis. Ce dispositif correspond à une réalisation déployée du dispositif de la figure 1. Cette réalisation permet une construction plus simple, moins onéreuse, mais plus encombrante. Elle permet également de prévoir facilement trois plaques de détection ou plus par détecteur, ce qui améliore les performances de détection.

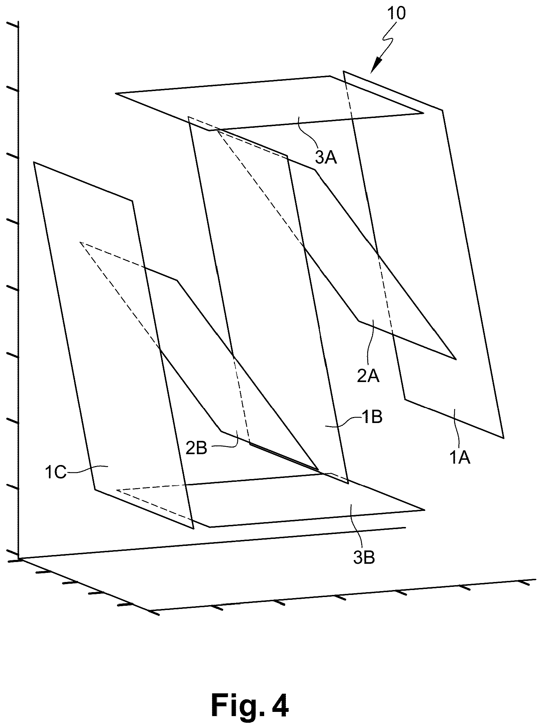

La figure 4 illustre un quatrième mode de réalisation d'un dispositif 10 de tomographie selon l'invention. Ce quatrième mode de réalisation est relatif à une construction compacte du même type que celle de la figure 1.

Le dispositif 10 est ici représenté en perspective et comporte :
- un premier détecteur sub-horizontal (son axe de visée est légèrement au-dessus de l'horizontale) comportant trois plaques de détection parallèles 1A, 1B, 1C ;
- un deuxième détecteur oblique (son axe de visée est environ de 45° au-dessus de l'horizontale), comportant deux plaques de détection parallèles 2A, 2B ;
- un troisième détecteur zénithal (son axe de visée est sensiblement vertical) comportant deux plaques de détection parallèles 3A, 3B.

Le caractère compact du dispositif 10 est obtenu dans cet exemple par :
- une imbrication du deuxième détecteur dans le premier détecteur : la plaque 2A est disposée entre les plaques 1A et 1B, et la plaque 2B est disposée entre les plaques 1B et 1C ;
- l'ensemble du premier et deuxième détecteur est disposé entre les plaques 3A, 3B du troisième détecteur.

Les caractéristiques des détecteurs mis en œuvre dans cet exemple sont les suivantes :
- détecteur sub-horizontal : dimensions 102 cm × 70 cm, écartement des plaques de détection 102 cm, résolution 10 × 10 pixels ;
- détecteur oblique : dimensions 75 cm × 70 cm, écartement des plaques de détection 54 cm, résolution 10 × 10 pixels ;
- détecteur zénithal : 70 cm × 70 cm, écartement des plaques de détection 120 cm, résolution 7 × 10 pixels.

Ce dispositif 10 présente les mêmes avantages que le dispositif de la figure 1 et peut de plus mettre en œuvre un filtrage en couplant la détection de plusieurs plaques de détecteurs différents. Par exemple, la plaque centrale 1B du détecteur sub-horizontal peut servir de plan de filtrage des coïncidences fortuites pour les autres détecteurs. La mutualisation de cette plaque de détection 1B centrale permet aussi de réduire l'électronique et la consommation électrique.

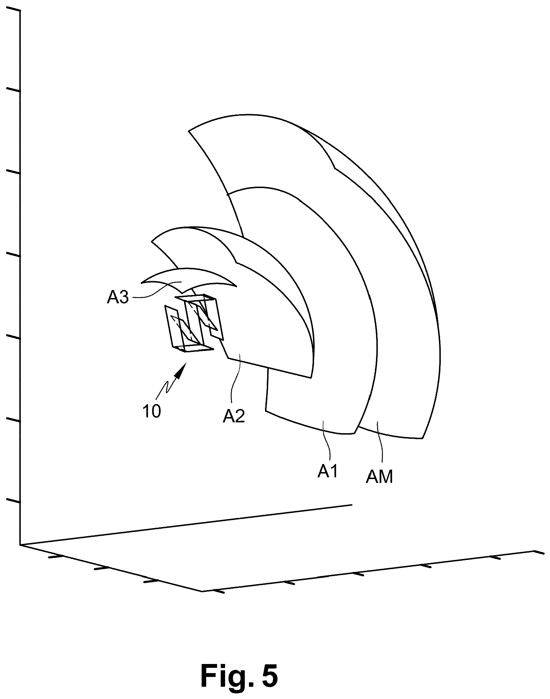

L'acceptance de chaque détecteur est illustrée schématiquement à la figure 5. Sur cette figure, le dispositif 10 est représenté en face de divers angles solides A1, A2, A3, AM, illustrés par une portion de plan incurvé. Ces angles solides A1, A2, A3, AM illustrent l'acceptance de chaque détecteur. L'angle solide A1 correspond à l'acceptance du détecteur sub-horizontal, l'angle solide A2 correspond à l'acceptance du détecteur oblique, et l'angle solide A3 correspond à l'acceptance du détecteur zénithal.

Dans cet exemple, du fait de la relative petite taille des plaques du détecteur zénithal et de leur assez grand écartement, l'acceptance de ce détecteur est la plus faible (de l'ordre de 20 cm².sr pour des trajectoires de particules proches de la perpendiculaire aux plaques de détection). L'acceptance du détecteur oblique est de l'ordre de 80 cm².sr pour des trajectoires de particules proches de la perpendiculaire aux plaques de détection. L'acceptance du détecteur sub-horizontal est de l'ordre de 40 cm².sr pour des trajectoires de particules proches de la perpendiculaire aux plaques de détection.

Du fait du grand écartement entre les plaques (c'est-à-dire l'écartement entre les deux plaques externes 1A et 1C), le détecteur sub-horizontal présente donc ici une acceptance qui est faible par rapport aux attentes. Cette acceptance est ici de préférence renforcée en utilisant l'acceptance d'une paire mixte de plaques de détection. Par exemple, un détecteur formé de la plaque arrière 2B du détecteur oblique et de la plaque avant 1A du détecteur sub-horizontal peut être mis en œuvre par le module électronique de commande pour former un détecteur, dénommé ici « détecteur mixte » et dont l'acceptance est schématisée par l'angle solide AM sur la figure 5. Cette acceptance est ici de l'ordre de 50 cm².sr pour des trajectoires de particules proches de la perpendiculaire aux plaques de détection.

L'acceptance du détecteur mixte est ainsi très comparable à celle du détecteur sub-horizontal, même si la résolution angulaire est légèrement dégradée du fait de l'inclinaison de la plaque 2B utilisée du détecteur oblique.

La figure 5 illustre le renforcement de l'acceptance du détecteur sub-horizontal par le détecteur mixte. Une acceptance totale combinée pour l'axe de visée sub-horizontal est obtenue en combinant les acceptances des détecteurs sub-horizontal et du détecteur mixte. De plus, de même que dans les modes de réalisation précédents, cette acceptance est de plus adaptée à son axe de visée, en fonction de ce qui est capté suivant l'angle zénithal. Les fonctions de calibrage automatique décrites précédemment s'appliquent également à cet exemple.

Les dispositifs du type compact (relatif dans ces exemples aux figures 1 et 4) permettent de combiner les détecteurs afin de multiplier les acceptances élémentaires contribuant à augmenter l'acceptance combinée totale.

Des variantes de réalisation du dispositif de tomographie densitométrique peuvent être mises en œuvre, par exemple en considérant d'autres particules élémentaires adaptées à la tomographie. En ce qui concerne le détecteur de particules, celui-ci peut comporter un ou plusieurs ensembles de plaques de détection parallèles qui comportent chacun plus de deux plaques (par exemple, trois) de détection. Dans ce cas, l'expression « l'écartement entre les plaques de détection » désigne l'écartement entre les plaques extérieures, c'est-à-dire les plaques les plus éloignées.

De plus, le calibrage automatique du dispositif peut être réalisé pour un quelconque axe de visées par rapport à tout autre axe de visée, en fonction du besoin.

L'invention s'applique tout particulièrement aux tunneliers mais tout autant à d'autres types de tomographie, tel que des applications de tomographie géologique. Il peut s'agir d'applications géologiques ou industrielles où il est possible de recueillir des données iso-statistiques dans de larges gammes d'angles de visée afin de réaliser une tomographie d'égale résolution temporelle dans toute la zone d'étude. Pour ces configurations, l'invention est particulièrement avantageuse dans les cas suivants : 1) lorsque le flux de particules diminue pour les lignes de visée qui se rapprochent de l'horizontale (ce qui est le cas des muons) ; 2) lorsque les volumes de matière à imager ont une forme prismatique avec une opacité (c'est à dire un effet d'écran sur le flux de particules) qui augmente quand on vise vers l'horizontale (par exemple, le coin supérieur d'une falaise, un cône volcanique, une pyramide). En milieu industriel, par exemple dans les installations nucléaires et les hauts-fourneaux, l'opacité d'un bâti visé augmente significativement quand on passe des visées verticales aux visées sub-horizontales. Pour améliorer la tomographie, il est intéressant de compenser à la fois l'augmentation de l'opacité et la diminution du flux de particules par des acceptances adaptées.

## Revendications

1. Dispositif de tomographie densitométrique par particules élémentaires, comportant :
- un détecteur de particules élémentaires muni d'au moins quatre plaques de détection ;
- un module électronique de commande (6) connecté au détecteur de particules élémentaires et adapté à détecter la présence de particules élémentaires sur chacune des plaques de détection ;
**caractérisé en ce que** le détecteur de particules élémentaires comporte au moins :
- un premier axe de visée dans lequel le détecteur de particules élémentaires présente une première acceptance ;
- un deuxième axe de visée, non parallèle au premier axe de visée, dans lequel le détecteur de particules élémentaires présente une deuxième acceptance,
- un châssis dans lequel est monté au moins :
i. un premier ensemble de plaques de détection parallèles (1A, 1B) orientées angulairement selon le premier axe de visée (L1) ;
ii. un deuxième ensemble de plaques de détection parallèles (5A, 5B) orienté angulairement selon le deuxième axe de visée (L5) ;
tel que les différents ensembles de plaques de détection parallèles sont imbriqués ; et
le deuxième axe de visée étant plus proche de la direction zénithale que le premier axe de visée et la première acceptance étant supérieure à la deuxième acceptance.

2. Dispositif selon la revendication 1, **caractérisé en ce que** le module électronique de commande (6) est adapté à calibrer, notamment de manière continue, les informations de flux de particules élémentaires reçues selon le premier axe de visée sur la base des informations de flux de particules élémentaires reçues selon le deuxième axe de visée.

3. Dispositif selon l'une des revendications 1 à 2, **caractérisé en ce que**, dans le premier ensemble de plaques de détection parallèles (1A, 1B), les plaques de détection sont d'une surface supérieure à celle des plaques de détection du deuxième ensemble de plaques de détection parallèles (5A, 5B).

4. Dispositif selon l'une des revendications 1 à 3, **caractérisé en ce que**, dans le premier ensemble de plaques de détection parallèle (1A, 1B), l'écartement des plaques de détection est supérieur à l'écartement des plaques de détection du deuxième ensemble de plaques de détection parallèles (5A, 5B).

5. Dispositif selon l'une des revendications 1 à 4, **caractérisé en ce que** le détecteur de particules élémentaires comporte en outre des ensembles supplémentaires de plaques de détection parallèles (2A, 2B ; 3A, 3B ; 4A, 4B) présentant chacun une acceptance différente des autres ensembles de plaques de détection parallèles, ces ensembles supplémentaires de plaques de détection parallèles correspondant chacun à un axe de visée (L2, L3, L4) situé angulairement entre le premier axe de visée (L1) et le deuxième axe de visée (L2).

6. Dispositif selon l'une des revendications précédentes, **caractérisé en ce que** le détecteur de particules élémentaires est un détecteur de muons.

7. Procédé de tomographie densitométrique par particules élémentaires comportant la détection de flux de particules élémentaires traversant un dispositif de tomographie densitométrique selon l'une des revendications 1 à 6, **caractérisé en ce qu'**il comporte les étapes suivantes :
- détecter un flux de particules élémentaires selon un premier axe de visée relatif à une première acceptance ;
- détecter un flux de particules élémentaires selon un deuxième axe de visée, non parallèle au premier axe de visée, relatif à une deuxième acceptance qui est inférieure à la première acceptance.

8. Procédé selon la revendication 7, **caractérisé en ce qu'**il comporte en outre l'étape de calibrer les informations de flux de particules élémentaires reçues selon le premier axe de visée sur la base des informations de flux de particules élémentaires reçues selon le deuxième axe de visée.

9. Procédé selon l'une des revendications 7 ou 8, **caractérisé en ce que** les particules élémentaires détectées sont des muons.

## Patentansprüche

1. Vorrichtung zur densitometrischen Tomographie mittels Elementarteilchen, umfassend:
- einen Elementarpartikeldetektor, der mit mindestens vier Detektionsplatten ausgestattet ist;
- ein elektronisches Steuermodul (6), das mit dem Elementarpartikeldetektor verbunden und eingerichtet ist, das Vorhandensein mittels Elementarteilchen auf jeder der Detektionsplatten zu detektieren;
**dadurch gekennzeichnet, dass** der Elementarpartikeldetektor mindestens Folgendes umfasst:
- eine erste Zielachse, wobei der Elementarpartikeldetektor eine erste Akzeptanz aufweist;
- eine zweite Zielachse, die nicht parallel zur ersten Zielachse ist, wobei der Elementarpartikeldetektor eine zweite Akzeptanz aufweist,
- ein Gestell, in dem mindestens Folgendes montiert ist:
i. eine erste Gruppe paralleler Detektionsplatten (1A, 1B), die winkelförmig entlang der ersten Zielachse (L1) ausgerichtet sind;
ii. eine zweite Gruppe paralleler Detektionsplatten (5A, 5B), die winkelförmig entlang der zweiten Zielachse (L5) ausgerichtet sind;
wobei die verschiedenen Gruppen paralleler Detektionsplatten ineinandergreifen; und wobei die zweite Zielachse näher an der Zenitrichtung liegt als die erste Zielachse und die erste Akzeptanz größer ist als die zweite Akzeptanz.

2. Vorrichtung nach Anspruch 1, **dadurch gekennzeichnet, dass** das elektronische Steuermodul (6) dazu eingerichtet ist, insbesondere kontinuierlich die gemäß der ersten Zielachse empfangenen Informationen über den Elementarteilchenfluss auf der Grundlage der gemäß der zweiten Zielachse empfangenen Informationen über den Elementarteilchenfluss zu kalibrieren.

3. Vorrichtung nach einem der Ansprüche 1 bis 2, **dadurch gekennzeichnet, dass** die Detektionsplatten in der ersten Gruppe paralleler Detektionsplatten (1A, 1B) eine größere Oberfläche haben als die der Detektionsplatten der zweiten Gruppe paralleler Detektionsplatten (5A, 5B).

4. Vorrichtung nach einem der Ansprüche 1 bis 3, **dadurch gekennzeichnet, dass** in der ersten Gruppe paralleler Detektionsplatten (1A, 1B) der Abstand der Detektionsplatten größer ist als der Abstand der Detektionsplatten der zweiten Gruppe paralleler Detektionsplatten (5A, 5B).

5. Vorrichtung nach einem der Ansprüche 1 bis 4, **dadurch gekennzeichnet, dass** der Elementarpartikeldetektor ferner zusätzliche Gruppen paralleler Detektionsplatten (2A, 2B; 3A, 3B; 4A, 4B) umfasst, jeweils eine andere Akzeptanz als die anderen Gruppen paralleler Detektionsplatten aufweisen, wobei diese zusätzlichen Gruppen paralleler Detektionsplatten jeweils einer Zielachse (L2, L3, L4) entsprechen, die sich winkelförmig zwischen der ersten Zielachse (L1) und der zweiten Zielachse (L2) befindet.

6. Vorrichtung nach einem der vorhergehenden Ansprüche, **dadurch gekennzeichnet, dass** der Elementarpartikeldetektor ein Myonendetektor ist.

7. Verfahren zur densitometrischen Elementarpartikeltomographie, das das Detektieren mittels Elementarteilchen umfasst, die eine densitometrische Tomographievorrichtung nach einem der Ansprüche 1 bis 6 durchlaufen, **dadurch gekennzeichnet, dass** es die folgenden Schritte umfasst:
- Detektieren eines Elementarteilchenfluss entlang einer ersten Zielachse in Bezug auf eine erste Akzeptanz;
- Detektieren eines Elementarteilchenfluss entlang einer zweiten Zielachse, die nicht parallel zur ersten Zielachse verläuft, in Bezug auf eine zweite Akzeptanz, die kleiner ist als die erste Akzeptanz.

8. Verfahren nach Anspruch 7, **dadurch gekennzeichnet, dass** es ferner den Schritt des Kalibrierens der gemäß der ersten Zielachse empfangenen Informationen über den Elementarteilchenfluss auf der Grundlage der gemäß der zweiten Zielachse empfangenen Informationen über den Elementarteilchenfluss umfasst.

9. Verfahren nach einem der Ansprüche 7 oder 8, **dadurch gekennzeichnet, dass** die detektierten Elementarpartikel Myonen sind.

## Claims

1. An elementary particle densitometric tomography device, comprising:
- an elementary particle detector provided with at least four detection plates;
- an electronic control module (6) connected to the elementary particle detector and configured to detect the presence of elementary particles on each of the detection plates;
**characterized in that** the elementary particle detector comprises at least:
- a first line of sight in which the elementary particle detector has a first acceptance;
- a second line of sight, non-parallel to the first line of sight, in which the elementary particle detector has a second acceptance;
- a chassis in which is mounted at least:
i. a first set of parallel detection plates (1A, 1B) angularly oriented along the first line of sight (L1);
ii. a second set of parallel detection plates (5A, 5B) angularly oriented along the second line of sight (L5);
such that the different sets of parallel detection plates are interleaved; and
wherein the second line of sight is closer to the zenith direction than the first line of sight, and the first acceptance is greater than the second acceptance.

2. The device according to claim 1, wherein the electronic control module (6) is configured to calibrate, notably continuously, the elementary particle flux data received along the first line of sight based on the elementary particle flux data received along the second line of sight.

3. The device according to any one of claims 1 or 2, wherein, in the first set of parallel detection plates (1A, 1B), the detection plates have a larger surface area than the detection plates of the second set of parallel detection plates (5A, 5B).

4. The device according to any one of claims 1 to 3, wherein, in the first set of parallel detection plates (1A, 1B), the spacing between detection plates is greater than the spacing between the detection plates of the second set of parallel detection plates (5A, 5B).

5. The device according to any one of claims 1 to 4, wherein the elementary particle detector further comprises additional sets of parallel detection plates (2A, 2B; 3A, 3B; 4A, 4B), each having a different acceptance from the other sets of parallel detection plates, said additional sets each corresponding to a line of sight (L2, L3, L4) angularly located between the first line of sight (L1) and the second line of sight (L5).

6. The device according to any one of the preceding claims, wherein the elementary particle detector is a muon detector.

7. A method for densitometric tomography using elementary particles, comprising the detection of elementary particle flux passing through a densitometric tomography device according to any one of claims 1 to 6, wherein the method comprises the steps of:
detecting a flux of elementary particles along a first line of sight corresponding to a first acceptance;
detecting a flux of elementary particles along a second line of sight, non-parallel to the first line of sight, corresponding to a second acceptance that is lower than the first acceptance.

8. The method according to claim 7, further comprising the step of calibrating the elementary particle flux data received along the first line of sight based on the elementary particle flux data received along the second line of sight.

9. The method according to claim 7 or 8, wherein the detected elementary particles are muons.
